# EUROPEAN PATENT SPECIFICATION

(11) **EP 2 899 856 B1**
(45) Date of publication and mention of the grant of the patent: **30.11.2016**
(21) Application number: 14152636.8
(22) Date of filing: 27.01.2014
(51) Int. Cl.: H02K 5/173, H02K 21/22, F16C 33/66, F16C 19/54, F16C 35/04, F01M 11/06

(54) **A stator for an electrical machine of a mobile working machine**
Stator für eine elektrische Maschine einer mobilen Arbeitsmaschine
Stator pour une machine électrique d'une machine de travail mobile

(43) Date of publication of application: 29.07.2015
(73) Proprietor: Visedo Oy, 53850 Lappeenranta (FI)
(72) Inventor: Päivinen, Timo, 53850 Lappeenranta (FI)
(74) Representative: Berggren Oy Ab

(56) References cited:
- US-A- 1 691 015
- US-A1- 2012 001 521

## Description

### Field of the invention

The invention relates generally to rotating electrical machines. More particularly, the invention relates to a stator of an electrical machine and to a method for lubricating bearings of an electrical machine. Furthermore, the invention relates to an electrical machine for e.g. a mobile working machine. Furthermore, the invention relates to a mobile working machine.

### Background

Rotating electrical machines, such as motors and generators, generally comprise a rotor and a stator which are arranged such that a magnetic flux and a torque generating interaction can be developed between these two. The rotor is rotatably supported with respect to the stator with the aid of bearings which can be for example ball bearings, roller bearings, or slide bearings. Bearings of the kind mentioned above require lubrication in order to operate properly. In conjunction with ball and roller bearings, the lubrication can be for example grease lubrication, oil spray lubrication, or oil-bath lubrication. In many cases, the oil-bath lubrication is advantageous and in these cases an electrical machine comprises a mechanical structure constituting a lubricant oil room encompassing the bearings and enabling the oil-bath lubrication of the bearings. A general inconvenience related to the oil-bath lubrication of the kind described above is that one of the bearings may get dry while another of the bearings may get too deeply immersed in the lubrication oil when the electrical machine is in a tilted position. For example, electrical motors and generators of mobile working machines and other mobile devices may have to be able to operate in many different positions.

A typical way to solve the above-described problem is to arrange a separate lubrication oil room for each bearing. This approach is, however, not free from challenges. One of the challenges is related to outer rotor electrical machines where the rotor has a domed shape extending to cover the active part of the stator and an area where one of the bearings of the electrical machine is located. In this case, it may be challenging to arrange a channel to the lubrication oil room encompassing above-mentioned bearing so that the lubrication oil can be e.g. changed without a need to disengage the rotor from the other portion of the electrical machine.

Document US2012/0001521 A1 discloses a stator for an electrical machine, the stator comprising:
- an active part for magnetically interacting with a rotor of the electrical machine,
- a first bearing and a second bearing for supporting the rotor of the electrical machine with respect to the active part, and
- a mechanical structure constituting a lubricant oil room encompassing the first and the second bearing and enabling oil-bath lubrication of both bearings.

Document US1691015 discloses a method for lubricating bearings of a machine, the method comprising:
- supplying lubricant oil to a first lubricant oil room encompassing a first one of the bearings of a machine and to a second lubricant oil room encompassing a second one of the bearings of the machine,
wherein the lubricant oils flows, when being supplied to the first and second lubricant oil rooms, via a channel connecting the first and second lubricant oil rooms to each other.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the invention, there is provided a new stator for an electrical machine of, for example, a mobile working machine. A stator according to the invention comprises:
- an active part for magnetically interacting with the rotor of the electrical machine,
- a first bearing and a second bearing for supporting the rotor of the electrical machine with respect to the active part, and
- a mechanical structure constituting a first lubricant oil room encompassing the first bearing and enabling oil-bath lubrication of the first bearing, and a second lubricant oil room encompassing the second bearing and enabling oil-bath lubrication of the second bearing,

The above-mentioned mechanical structure comprises:
- a first channel connecting the first and second lubricant oil rooms to each other and enabling lubricant oil to flow to between the first and second lubricant oil rooms,
- a closing-mechanism for closing the first channel so as to prevent the lubricant oil from flowing between the first and second lubricant oil rooms, and
- at least one second channel for supplying the lubricant oil to both of the first and second lubricant oil rooms when the closing-mechanism is in a position allowing the lubricant oil to flow between the first and second lubricant oil rooms.

When the closing-mechanism is in the position allowing the lubricant oil to flow, the first and second bearings factually share a common lubricant oil room and therefore the lubricant oil of both of the bearings can be supplied with the aid of the above-mentioned second channel. On the other hand, when the closing-mechanism is in the position preventing the lubricant oil from flowing, both of the bearings have their own, separated lubricant oil rooms. Thus, the closing-mechanism makes it possible that both of the bearings are duly lubricated also when the electrical machine is in a tilted position.

In accordance with the invention, there is provided also a new electrical machine for a mobile working machine. An electrical machine according to the invention comprises a stator and a rotor, wherein the stator is according to the invention.

In accordance with the invention, there is provided also a new mobile working machine. A mobile working machine according to the invention comprises:
- a combustion engine, and
- an electromechanical power transmission chain between the combustion engine and one or more actuators, e.g. wheels and/or chain tracks, of the mobile working machine.

The above-mentioned electromechanical transmission chain comprises at least one electrical machine according to the present invention.

The mobile working machine comprises preferably a liquid cooling system arranged to cool both a hydraulic system of the mobile working machine and the electromechanical power transmission chain. The mobile working machine can be, for example, a tractor, a bucket charger, a road drag, a bulldozer, or any other working machine having wheels and/or chain tracks.

In accordance with the invention, there is provided also a new method for lubricating bearings of an electrical machine. A method according to the invention comprises:
- supplying lubricant oil to a first lubricant oil room encompassing a first one of the bearings of the electrical machine and to a second lubricant oil room encompassing a second one of the bearings of the electrical machine, where the lubricant oils flows, when being supplied to the first and second lubricant oil rooms, via a channel connecting the first and second lubricant oil rooms to each other, and subsequently
- closing the channel so as to prevent the lubricant oil from flowing between the first and second lubricant oil rooms.

A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### Brief description of the figures

Exemplifying and non-limiting embodiments of the invention and their advantages are explained in greater detail below in the sense of examples and with reference to the accompanying drawings, in which:
figures 1 a and 1 b show a section view of an electrical machine according to an exemplifying and non-limiting embodiment of the invention, the section being taken along a plane parallel with the geometrical rotation axis of the rotor of the electrical machine,
figure 2 shows a schematic illustration of an electrical machine according to an exemplifying and non-limiting embodiment of the invention,
figure 3 shows an illustration of a mobile working machine according to an exemplifying and non-limiting embodiment of the invention, and
figure 4 shows flow-chart of a method according to an exemplifying and non-limiting embodiment of the invention for lubricating bearings of an electrical machine.

### Description of the exemplifying and non-limiting embodiments

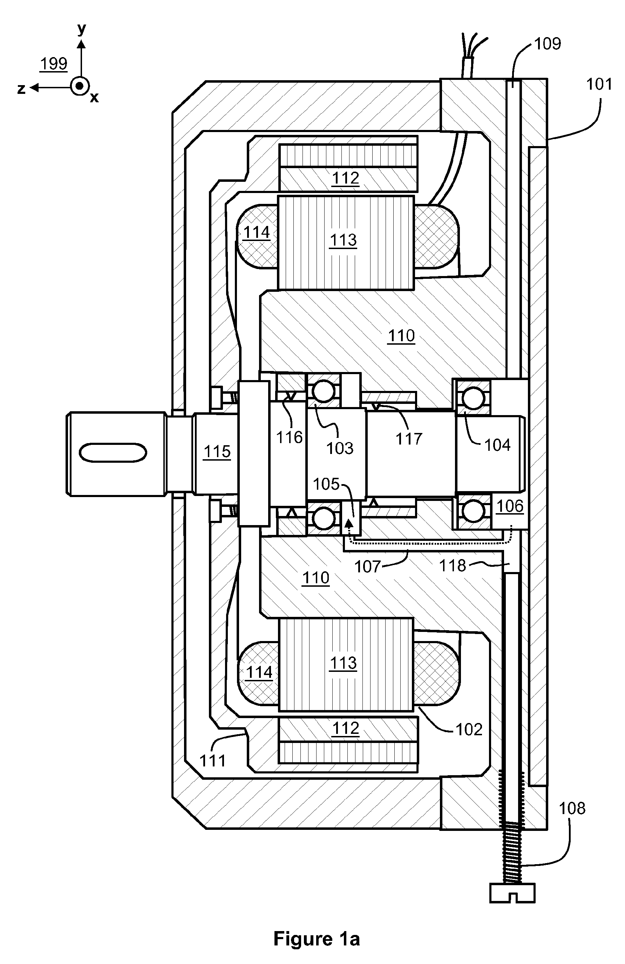

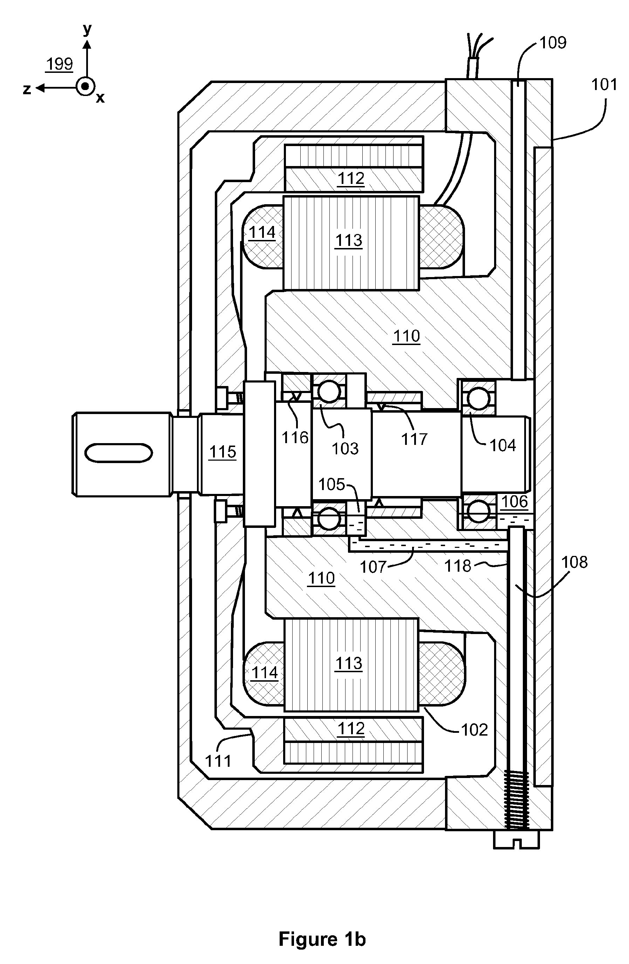

Figure 1 a shows a section view of an electrical machine according to an exemplifying and non-limiting embodiment of the invention, where the section has been taken along a plane parallel with the yz-plane of a coordinate system 199. The electrical machine comprises a stator 101 and a rotor 111 which are arranged such that a magnetic flux and a torque generating interaction can be developed between these two. The stator 101 of the electrical machine comprises an active part 102 for magnetically interacting with the rotor 111. The active part 102 comprises windings 114 and a core structure 113 made of ferromagnetic material and comprising a yoke and stator teeth connected to the yoke. The core structure 113 can be composed of electrically insulated ferromagnetic steel sheets stacked in the direction of the z-axis of the coordinate system 199. As another exemplifying alternative, the core structure 113 can be made of ferrite or iron powder composites such as SOMALOY^{®} (Soft Magnetic Composite). The stator 101 comprises a first bearing 103 and a second bearing 104 for rotatably supporting the rotor 111 with respect to the active part of the stator. In the exemplifying case illustrated in figure 1a, the bearings 103 and 104 are ball bearings but the beatings could as well be another type such as e.g. roller bearings or slide bearings. The stator 101 comprises a mechanical structure constituting a first lubricant oil room 105 encompassing the bearing 103 and enabling oil-bath lubrication of the bearing 103, and a second lubricant oil room 106 encompassing the bearing 104 and enabling oil-bath lubrication of the bearing 104. The mechanical structure comprises a first channel 107 connecting the lubricant oil rooms 105 and 106 to each other and enabling lubricant oil to flow to between the lubricant oil rooms 105 and 106. The mechanical structure comprises a closing-mechanism for closing the channel 107 so as to prevent the lubricant oil from flowing between the lubricant oil rooms 105 and 106. The mechanical structure comprises at least one second channel 109 for supplying lubricant oil to both of the lubricant oil rooms 105 and 106 when the closing-mechanism is in a position allowing the lubricant oil to flow between the lubricant oil rooms.

In the exemplifying electrical machine illustrated in figure 1a, the closing-mechanism comprises a hole 118 extending to the channel 107 and a closing-element 108 capable of closing the channel 107 when being installed in the hole. In the exemplifying situation illustrated in figure 1a, the closing-mechanism is in the position allowing the lubricant oil to flow between the lubricant oil rooms 105 and 106. The flow of the lubricant oil from the lubricant oil room 106 to the lubricant oil room 105 is depicted with a dashed line arrow in figure 1a. Figure 1b illustrates an exemplifying situation where the closing-mechanism is in the position preventing the lubricant oil from flowing between the lubricant oil rooms 106 and 105 and where there is lubricant oil in the lubricant oil rooms 105 and 106 and in the channel 107. In figure 1b, the lubricant oil is depicted with short horizontal lines. It is worth noting that in stators according to different exemplifying embodiments of the invention there can be different closing-mechanisms. In a stator according to an exemplifying and non-limiting embodiment of the invention, the closing-mechanism comprises a valve element located in the channel 107 and capable of being twisted around a geometrical axis substantially perpendicular to the channel 107. The valve element may comprise a through hole that is in line with the channel 107 when the closing-mechanism allows the lubricant oil to flow and transversal to the channel 107 when the closing-mechanism prevents the lubricant oil from flowing.

In the exemplifying electrical machine illustrated in figures 1 a and 1 b, the mechanical structure that constitutes the lubricant oil rooms comprises a tubular section 110 so that the active part 102 of the stator is mounted to the outer periphery of the tubular section and the bearings 103 and 14 are mounted to the inner periphery of the tubular section. The rotor 111 has a domed shape extending to cover the active part 102 of the stator. In conjunction with the electrical machine illustrated in figures 1 a and 1 b, it is especially advantageous that lubricant oil for all bearings of the electrical machine can be supplied via the same end of the electrical machine. In the case illustrated in figures 1 a and 1 b, the lubrication oil for both the drive end "DE" bearing 103 and the non-drive end "NDE" bearing 104 can be supplied via the non-drive end.

In the exemplifying electrical machine illustrated in figures 1 a and 1 b, the mechanical structure that constitutes the lubricant oil rooms comprises at least one shaft seal 117 which isolates the lubricant oil rooms 105 and 106 from each other when the shaft seal 117 is in contact with the shaft 115 of the rotor 111. The above-mentioned at least one shaft seal 117 is located between the bearings 103 and 104 in an axial direction of the electrical machine, i.e. in the z-direction of the coordinate system 199. Furthermore, the mechanical structure comprises a shaft seal 116.

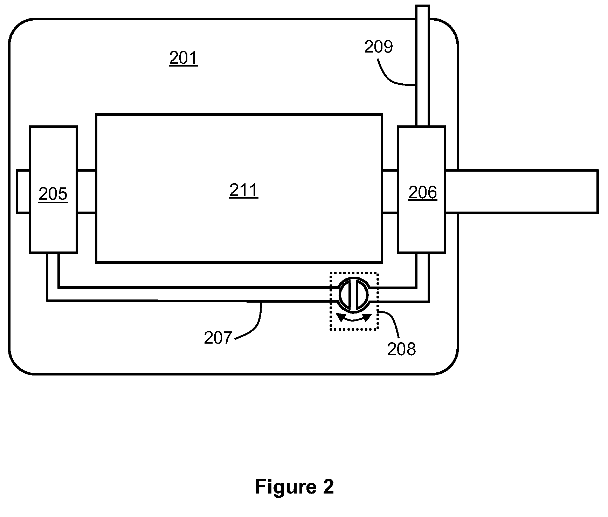

In the exemplifying case illustrated in figures 1a and 1b, the electrical machine is an outer rotor electrical machine where the rotor 111 comprises permanent magnet material 112. The above-presented principle for arranging the lubrication of bearings of an electrical machine is also applicable in other kinds of electrical machines. For example, an electrical machine according to an exemplifying embodiment of the invention could as well be for example an induction machine, an electrically excited synchronous machine, or a direct current "DC" machine. Furthermore, an electrical machine according to an exemplifying embodiment of the invention can be either an inner rotor machine or an outer rotor machine. Figure 2 shows a schematic illustration of an inner rotor electrical machine according to an exemplifying and non-limiting embodiment of the invention. The electrical machine comprises a stator 201 and a rotor 211. The core structure and the windings of the stator are not shown in figure 2. The stator 201 comprises a first lubricant oil room 205 encompassing a first bearing and enabling oil-bath lubrication of the first bearing, and a second lubricant oil room 206 encompassing a second bearing and enabling oil-bath lubrication of the second bearing. The first and second bearings are not shown in figure 2. The stator comprises a first channel 207 connecting the lubricant oil rooms 205 and 206 to each other and enabling lubricant oil to flow between the lubricant oil rooms. The stator comprises a closing-mechanism 208 for closing the channel 207 so as to prevent the lubricant oil from flowing between the lubricant oil rooms. The stator comprises at least one second channel 209 for supplying the lubricant oil to both of the lubricant oil rooms 205 and 206 when the closing-mechanism 208 is in a position allowing the lubricant oil to flow between the lubricant oil rooms 205 and 206.

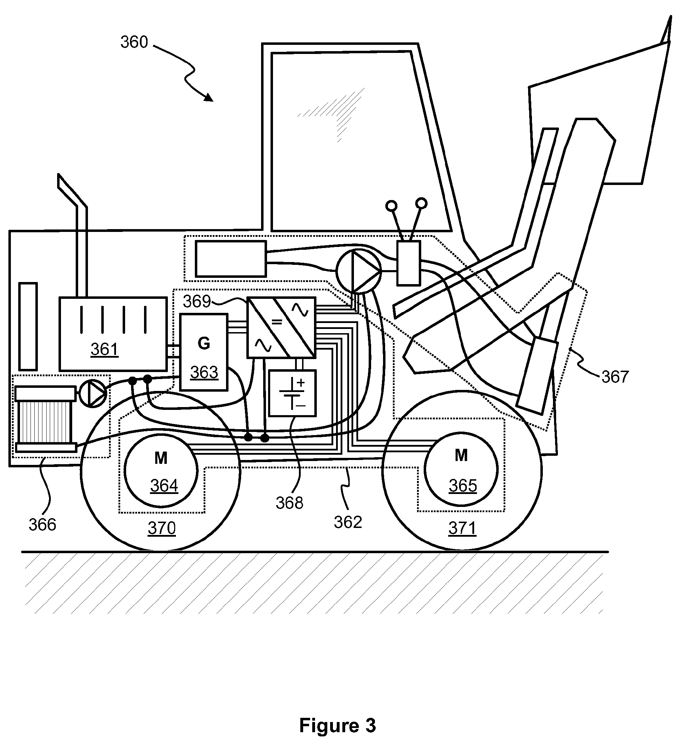

Figure 3 shows an illustration of a mobile working machine 360 according to an exemplifying and non-limiting embodiment of the invention. In this exemplifying case, the mobile working machine is a bucket charger but the mobile working machine could as well be a tractor, a road drag, a bulldozer, or any other working machine having wheels and/or chain tracks. The mobile working machine comprises a combustion engine 361 that can be e.g. a diesel engine, an Otto-cycle engine, or a turbine engine. The mobile working machine comprises an electromechanical power transmission chain 362 between the combustion engine and wheels 370, 371 of the mobile working machine. The electromechanical transmission chain comprises an electrical machine 363 the rotor of which is connected to the shaft of the combustion engine 361. The electromechanical transmission chain further comprises a frequency converter 369 and electrical machines 364, 365 at the hubs of the wheels of the mobile working machine. The frequency converter 369 is arranged to convert the electrical voltage produced by the electrical machine 363 into electrical voltages having amplitudes and frequencies suitable for the electrical machines 364, 365. The frequency converter may have separate output stages for all the electrical machines 364, 365 in which case each of these electrical machines can be controlled individually, or all the electrical machines 364, 365 can be connected to one and the same output stage of the frequency converter in which case these electrical machines are controlled as a group. One or more of the electrical machines 363, 364, 365 comprise a stator that comprises:
- an active part for magnetically interacting with the rotor of the electrical machine,
- a first bearing and a second bearing for supporting the rotor of the electrical machine with respect to the active part, and
- a mechanical structure constituting a first lubricant oil room encompassing the first bearing and enabling oil-bath lubrication of the first bearing, and a second lubricant oil room encompassing the second bearing and enabling oil-bath lubrication of the second bearing.

The above-mentioned mechanical structure comprises:
- a first channel connecting the first and second lubricant oil rooms to each other and enabling lubricant oil to flow to between the first and second lubricant oil rooms,
- a closing-mechanism for closing the first channel so as to prevent the lubricant oil from flowing between the first and second lubricant oil rooms, and
- at least one second channel for supplying the lubricant oil to both of the first and second lubricant oil rooms when the closing-mechanism is in a position allowing the lubricant oil to flow between the first and second lubricant oil rooms.

A mobile working machine according to an exemplifying and non-limiting embodiment of the invention comprises a liquid cooling system 366 arranged to cool the electromechanical power transmission chain 362.

A mobile working machine according to an exemplifying and non-limiting embodiment of the invention comprises a liquid cooling system arranged to cool both a hydraulic system 367 of the mobile working machine and the electromechanical power transmission chain 362.

A mobile working machine according to an exemplifying and non-limiting embodiment of the invention comprises a liquid cooling system arranged to cool both the electromechanical power transmission chain 362 and the combustion engine 361.

In a mobile working machine according to an exemplifying and non-limiting embodiment of the invention, the electromechanical power transmission chain comprises a battery 368 and/or an electric double-layer capacitor arranged to respond to peak power needs exceeding the maximum power of the combustion engine 361. The battery and/or the electric double-layer capacitor can be connected, for example, to a direct voltage intermediate circuit of the frequency converter 369. An electric double-layer capacitor is often called a "super capacitor".

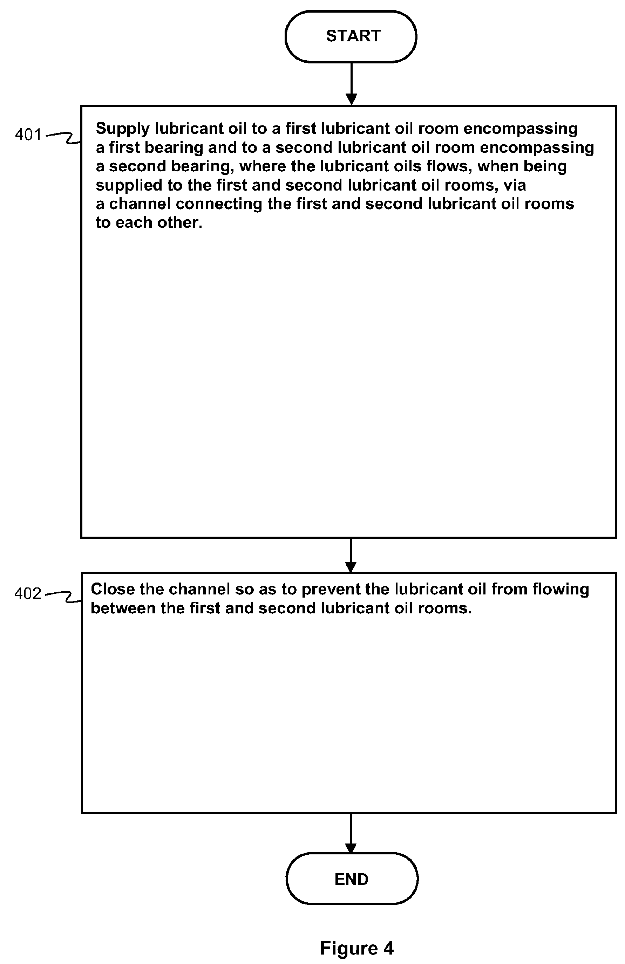

Figure 4 shows flow-chart of a method according to an exemplifying and non-limiting embodiment of the invention for lubricating bearings of an electrical machine. The method comprises the following actions:
- action 401: supplying lubricant oil to a first lubricant oil room encompassing a first one of the bearings of the electrical machine and to a second lubricant oil room encompassing a second one of the bearings of the electrical machine, where the lubricant oils flows, when being supplied to the first and second lubricant oil rooms, via a channel connecting the first and second lubricant oil rooms to each other, and subsequently
- action 402: closing the channel so as to prevent the lubricant oil from flowing between the first and second lubricant oil rooms.

The specific examples provided in the description given above should not be construed as limiting the applicability and/or interpretation of the appended claims.

## Claims

1. A stator (101) for an electrical machine, the stator comprising:
- an active part (102) for magnetically interacting with a rotor of the electrical machine,
- a first bearing (103) and a second bearing (104) for supporting the rotor of the electrical machine with respect to the active part, and
- a mechanical structure constituting a first lubricant oil room (105) encompassing the first bearing and enabling oil-bath lubrication of the first bearing, and a second lubricant oil room (106) encompassing the second bearing and enabling oil-bath lubrication of the second bearing,
wherein the mechanical structure comprises a first channel (107) connecting the first and second lubricant oil rooms to each other and enabling lubricant oil to flow between the first and second lubricant oil rooms, a closing-mechanism (108, 118) for closing the first channel so as to prevent the lubricant oil from flowing between the first and second lubricant oil rooms, and at least one second channel (109) for supplying the lubricant oil to both the first and second lubricant oil rooms when the closing-mechanism is in a position allowing the lubricant oil to flow between the first and second lubricant oil rooms.

2. A stator according to claim 1, wherein the closing-mechanism comprises a hole (118) extending to the first channel and a closing-element (108) capable of closing the first channel when being installed in the hole.

3. A stator according to claim 1, wherein the closing-mechanism comprises a valve element located in the first channel and capable of being twisted around a geometrical axis substantially perpendicular to the first channel, the valve element comprising a through hole that is in line with the first channel when the closing-mechanism allows the lubricant oil to flow, and transversal to the first channel when the closing-mechanism prevents the lubricant oil from flowing.

4. A stator according to any of claims 1-3, wherein the stator is suitable for an outer rotor electrical machine.

5. A stator according to claim 4, wherein the mechanical structure comprises a tubular section (110) so that the active part is mounted to an outer periphery of the tubular section and the first and second bearings are mounted to an inner periphery of the tubular section.

6. A stator according to any of claims 1-5, wherein the mechanical structure comprises at least one shaft seal (117) for isolating the first and second lubricant oil rooms from each other when being in contact with a shaft of the rotor of the electrical machine, the at least one shaft seal being located between the first and second bearings (103, 104) in an axial direction of the electrical machine.

7. An electrical machine comprising a stator (101) according to any of claims 1-6 and a rotor (111) rotatably supported by the first and second bearings.

8. An electrical machine according claim 7, wherein the electrical machine is an outer rotor electrical machine, the stator is according to claim 5, and the rotor (111) has a domed shape extending to cover the active part of the stator.

9. An electrical machine according claim 7 or 8, wherein the rotor comprises permanent magnet material (112) for generating magnetic flux to between the rotor and the active part of the stator.

10. A mobile working machine (360) comprising:
- a combustion engine (361), and
- an electromechanical power transmission chain (362) between the combustion engine and one or more actuators of the mobile working machine,
wherein the electromechanical transmission chain comprises at least one electrical machine (363-365) according to any of claims 7-9.

11. A mobile working machine according to claim 10, wherein the mobile working machine comprises a liquid cooling system (366) arranged to cool both the electromechanical power transmission chain (362) and a hydraulic system (367) of the mobile working machine.

12. A method for lubricating bearings of an electrical machine, the method comprising:
- supplying (401) lubricant oil to a first lubricant oil room encompassing a first one of the bearings of the electrical machine and to a second lubricant oil room encompassing a second one of the bearings of the electrical machine,
wherein the lubricant oils flows, when being supplied to the first and second lubricant oil rooms, via a channel connecting the first and second lubricant oil rooms to each other, and that the method further comprises, after the lubricant oil has been supplied to the first and second lubricant oil rooms, closing (402) the channel so as to prevent the lubricant oil from flowing between the first and second lubricant oil rooms.

## Patentansprüche

1. Stator (101) für eine elektrische Maschine, wobei der Stator umfasst:
- einen aktiven Teil (102) zum magnetischen Interagieren mit einem Rotor der elektrischen Maschine,
- ein erstes Lager (103) und ein zweites Lager (104) zum Haltern des Rotors der elektrischen Maschine in Bezug auf den aktiven Teil, und
- eine mechanische Struktur beinhaltend einen ersten Schmierölraum (105) umgebend das erste Lager und ermöglichend eine Ölbadschmierung des ersten Lagers und einen zweiten Schmierölraum (106) umgebend das zweite Lager und ermöglichend eine Ölbadschmierung des zweiten Lagers,
wobei die mechanische Struktur umfasst einen ersten Kanal (107), der den ersten und den zweiten Schmierölraum miteinander verbindet und es dem Schmieröl ermöglicht, zwischen dem ersten und dem zweiten Schmierölraum zu fließen, einen Schließmechanismus (108, 118) zum Schließen des ersten Kanals, um das Schmieröl vom Fließen zwischen dem ersten und dem zweiten Schmierölraum abzuhalten, und mindestens einen zweiten Kanal (109) zum Bereitstellen des Schmieröls für sowohl den ersten als auch den zweiten Schmierölraum, wenn der Schließmechanismus in einer Position ist, die es dem Schmieröl erlaubt, zwischen dem ersten und dem zweiten Schmierölraum zu fließen.

2. Stator nach Anspruch 1, wobei der Schließmechanismus ein Loch (118) umfasst, das sich zu dem ersten Kanal und einem Schließelement (108) erstreckt, das in der Lage ist, den ersten Kanal zu schließen, wenn es in dem Loch installiert ist.

3. Stator nach Anspruch 1, wobei der Schließmechanismus ein Ventilelement umfasst, das in dem ersten Kanal angeordnet ist und das geeignet ist, um eine geometrische Achse im Wesentlichen rechtwinklig zu dem ersten Kanal herum verdreht zu werden, wobei das Ventilelement ein Durchgangsloch umfasst, das in Linie mit dem ersten Kanal ist, wenn der Schließmechanismus es dem Schmieröl erlaubt, zu fließen, und das transversal zu dem ersten Kanal ist, wenn der Schließmechanismus das Schmieröl vom Fließen abhält.

4. Stator nach irgend einem der Ansprüche 1 - 3, wobei der Stator geeignet ist für eine elektrische Maschine mit Außenrotor.

5. Stator nach Anspruch 4, wobei die mechanische Struktur einen röhrenartigen Bereich (110) umfasst, so dass der aktive Teil an einer äußeren Peripherie des röhrenartigen Bereichs montiert ist und so dass das erste und das zweite Lager an einer inneren Peripherie des röhrenartigen Bereichs montiert sind.

6. Stator nach irgend einem der Ansprüche 1 - 5, wobei die mechanische Struktur mindestens eine Wellendichtung (117) umfasst zum Isolieren des ersten und des zweiten Schmierölraums voneinander, wenn sie in Kontakt mit einer Welle des Rotors der elektrischen Maschine sind, wobei die mindestens eine Wellendichtung zwischen dem ersten und dem zweiten Lager (103, 104) in einer axialen Richtung der elektrischen Maschine angeordnet ist.

7. Elektrische Maschine umfassend einen Stator (101) nach irgend einem der Ansprüche 1 - 6 und einen Rotor (111) drehbar durch das erste und das zweite Lager gehaltert.

8. Elektrische Maschine nach Anspruch 7, wobei die elektrische Maschine eine elektrische Maschine mit Außenrotor ist, wobei der Stator nach Anspruch 5 ist und wobei der Rotor (111) eine gewölbte Form aufweist, die sich erstreckt, um den aktiven Teil des Stators abzudecken.

9. Elektrische Maschine nach Anspruch 7 oder 8, wobei der Rotor permanentmagnetisches Material (112) umfasst zum Erzeugen eines magnetischen Flusses zwischen dem Rotor und dem aktiven Teil des Stators.

10. Mobile Arbeitsmaschine (360) umfassend:
- einen Verbrennungsmotor (361), und
- eine elektromechanische Energieübertragungskette (362) zwischen dem Verbrennungsmotor und einem oder mehreren Betätigungselementen der mobilen Arbeitsmaschine,
wobei die elektromechanische Übertragungskette mindestens eine elektrische Maschine (363 - 365) gemäß irgendeinem der Ansprüche 7 - 9 umfasst.

11. Mobile Arbeitsmaschine nach Anspruch 10, wobei die mobile Arbeitsmaschine ein Flüssigkeitskühlungssystem (366) umfasst, das eingerichtet ist, um sowohl die elektromechanische Energieübertragungskette (362) als auch ein hydraulisches System (367) der mobilen Arbeitsmaschine zu kühlen.

12. Verfahren zum Schmieren von Lagern einer elektrischen Maschine, wobei das Verfahren umfasst:
- Bereitstellen (401) von Schmieröl für einen ersten Schmierölraum, der ein erstes der Lager der elektrischen Maschine umgibt, und für einen zweiten Schmierölraum, der ein zweites der Lager der elektrischen Maschine umgibt,
wobei, wenn es für den ersten und den zweiten Schmierölraum bereitgestellt wird, das Schmieröl durch einen Kanal fließt, der den ersten und den zweiten Schmierölraum miteinander verbindet, und wobei das Verfahren ferner ein Schließen (402) des Kanals umfasst, nachdem das Schmieröl für den ersten und den zweiten Schmierölraum bereitgestellt wurde, um das Schmieröl vom Fließen zwischen dem ersten und dem zweiten Schmierölraum abzuhalten.

## Revendications

1. Stator (101) pour une machine électrique, le stator comprenant :
- une partie active (102) pour interagir magnétiquement avec un rotor de la machine électrique,
- un premier palier (103) et un second palier (104) pour supporter le rotor de la machine électrique par rapport à la partie active, et
- une structure mécanique constituant une première chambre d'huile lubrifiante (105) comprenant le premier palier et permettant une lubrification par bain d'huile du premier palier, et une seconde chambre d'huile lubrifiante (106) comprenant le second palier et permettant une lubrification par bain d'huile du second palier,
dans lequel la structure mécanique comprend un premier canal (107) raccordant les première et seconde chambres d'huile lubrifiante l'une à l'autre et permettant à l'huile lubrifiante de s'écouler entre les première et seconde chambres d'huile lubrifiante, un mécanisme de fermeture (108, 118) pour fermer le premier canal de manière à empêcher l'huile lubrifiante de s'écouler entre les première et seconde chambres d'huile lubrifiante, et au moins un second canal (109) pour fournir l'huile lubrifiante aux deux première et seconde chambres d'huile lubrifiante lorsque le mécanisme de fermeture est dans une position permettant à l'huile lubrifiante de s'écouler entre les première et seconde chambres d'huile lubrifiante.

2. Stator selon la revendication 1, dans lequel le mécanisme de fermeture comprend un trou (118) s'étendant vers le premier canal et un élément de fermeture (108) capable de fermer le premier canal lorsqu'il est installé dans le trou.

3. Stator selon la revendication 1, dans lequel le mécanisme de fermeture comprend un élément de soupape situé dans le premier canal et capable d'être enroulé autour d'un axe géométrique sensiblement perpendiculaire au premier canal, l'élément de soupape comprenant un trou traversant qui est en ligne avec le premier canal lorsque le mécanisme de fermeture permet à l'huile lubrifiante de s'écouler, et transversal au premier canal lorsque le mécanisme de fermeture empêche l'huile lubrifiante de s'écouler.

4. Stator selon l'une quelconque des revendications 1-3, dans lequel le stator est adapté à une machine électrique à rotor externe.

5. Stator selon la revendication 4, dans lequel la structure mécanique comprend une section tubulaire (110) de sorte que la partie active soit montée sur une périphérie externe de la section tubulaire et que les premier et second paliers soient montés sur une périphérie interne de la section tubulaire.

6. Stator selon l'une quelconque des revendications 1-5, dans lequel la structure mécanique comprend au moins un joint d'arbre (117) pour isoler les première et seconde chambres d'huile lubrifiante l'une de l'autre lorsqu'elles sont en contact avec un arbre du rotor de la machine électrique, le (s) joint (s) d'arbre étant situé (s) entre les premier et second paliers (103, 104) dans une direction axiale de la machine électrique.

7. Machine électrique comprenant un stator (101) selon l'une quelconque des revendications 1-6 et un rotor (111) supporté en rotation par les premier et second paliers.

8. Machine électrique selon la revendication 7, dans laquelle la machine électrique est une machine électrique à rotor externe, le stator est conforme à la revendication 5, et le rotor (111) présente une forme de dôme s'étendant pour recouvrir la partie active du stator.

9. Machine électrique selon la revendication 7 ou 8, dans laquelle le rotor comprend un matériau d'aimant permanent (112) pour générer un flux magnétique entre le rotor et la partie active du stator.

10. Machine de travail mobile (360) comprenant :
- un moteur à combustion (361), et
- une chaîne de transmission de puissance électromagnétique (362) entre le moteur à combustion et un ou plusieurs actionneurs de la machine de travail mobile, dans laquelle la chaîne de transmission électromécanique comprend au moins une machine électrique (363-365) selon l'une quelconque des revendications 7-9.

11. Machine de travail mobile selon la revendication 10, dans laquelle la machine de travail mobile comprend un système de refroidissement par liquide (366) conçu pour refroidir à la fois la chaîne de transmission de puissance électromécanique (362) et un système hydraulique (367) de la machine de travail mobile.

12. Procédé de lubrification de paliers d'une machine électrique, le procédé comprenant :
- la fourniture (401) d'huile lubrifiante à une première chambre d'huile lubrifiante comprenant un premier palier des paliers de la machine électrique et une seconde chambre d'huile lubrifiante comprenant un second palier des paliers de la machine électrique,
dans lequel l'huile lubrifiante s'écoule, lorsqu'elle est fournie aux première et seconde chambres d'huile lubrifiante, via un canal raccordant les première et seconde chambres d'huile lubrifiante l'une à l'autre, et le procédé comprend en outre, une fois que l'huile lubrifiante a été fournie aux première et seconde chambres d'huile lubrifiante, la fermeture (402) du canal de manière à empêcher l'huile lubrifiante de s'écouler entre les première et seconde chambres d'huile lubrifiante.
